# EUROPEAN PATENT APPLICATION

(11) **EP 2 998 101 A1**
(43) Date of publication of application: **23.03.2016**
(21) Application number: 15184445.3
(22) Date of filing: 09.09.2015
(51) Int. Cl.: B29C 65/06, B29L 31/30, B60R 19/03

(54) **MANUFACTURING METHOD FOR A COMPONENT INCLUDING A THERMOPLASTIC RESIN MATERIAL, AND MANUFACTURING DEVICE FOR A COMPONENT INCLUDING A THERMOPLASTIC RESIN MATERIAL**

(30) Priority: 17.09.2014 JP 2014189395
(71) Applicant: Toyota Jidosha Kabushiki Kaisha, Toyota-shi, Aichi-ken 471-8571 (JP)
(72) Inventor: IWANO, Yoshihiro, Toyota-shi Aichi-ken, 471-8571 (JP); TANAKA, Masaaki, Yokohama-shi Kanagawa-ken, 222-0002 (JP)
(74) Representative: Intès, Didier Gérard André

(57) **Abstract**

Bumper reinforcement (20) is manufactured by: a first process of respectively setting a first molded article (22) and a second molded article (24) in a first mold (30) and a second mold (32); a second process of setting a third molded article (25, formed employing a thermoplastic resin material or a metal material, in a third mold (34 such that the third molded article (25) is disposed between the first molded article (22) and the second molded article (24); and a third process of vibrating the third mold (34) such that by moving the third mold relative to the first mold (30) and the second mold, sliding contact is caused and vibration welding is performed between the first molded article (22) and the third molded article (25), and sliding contact is caused and vibration welding is performed between the second molded article (24) and the third molded article (25).

## Description

### Technical Field

The present invention is related to a manufacturing method for a component including a thermoplastic resin material, and to a manufacturing device for a component including a thermoplastic resin material.

### Related Art

A component (discontinuous fiber reinforced thermoplastic resin molded article) disclosed in Japanese Patent Application Laid-Open (JP-A) No. 2014-54798 is formed using a thermoplastic resin material and by joining one member formed with a hat shaped cross-section to another member.

The one member and the other member described above are joined by vibration welding flange portions (left-right lower end edges) of the one member to flange portions (left-right lower end edges) of the other member.

However, it is difficult to manufacture a component by joining together three components by vibration welding by directly employing the manufacturing method described in JP-A No. 2014-54798.

### Summary

In consideration of the above circumstances, an object of the present invention is to obtain a manufacturing method for a component including a thermoplastic resin material, and to obtain a manufacturing device for a component including a thermoplastic resin material, that are capable of joining together three components by vibration welding.

A manufacturing method for a component comprising a thermoplastic resin material according to a first aspect of the present invention comprises: a first process of respectively setting a first molded article and a second molded article in a first mold and a second mold that have been arranged so as to face each other; a second process of setting a third molded article, in a third mold such that the third molded article is disposed between the first molded article and the second molded article, the third molded article being formed using a thermoplastic resin material or a metal material in cases in which both the first molded article and the second molded article are formed using a thermoplastic resin material, or the third molded article being formed using a thermoplastic resin material in cases in which one of the first molded article or the second molded article is formed using a thermoplastic resin material and in cases in which both the first molded article and the second molded article are formed using a metal material; and a third process of vibrating the third mold and moving the third mold relative to the first mold and the second mold, such that sliding contact is caused and vibration welding is performed between the first molded article and the third molded article, and such that sliding contact is caused and vibration welding is performed between the second molded article and the third molded article.

According to the manufacturing method for a component comprising a thermoplastic resin material of the first aspect, the first molded article and the second molded article are arranged so as to face each other by respectively setting the first molded article and the second molded article in the first mold and the second mold. Then the third molded article is disposed between the first molded article and the second molded article by setting the third molded article in the third mold. Then sliding contact between the first molded article and the third molded article and sliding contact between the second molded article and the third molded article is caused by vibrating the third mold, and a molded article formed employing a thermoplastic resin is melted at portions where the sliding contact occurs. Then the first molded article and the third molded article are welded together, and the second molded article and the third molded article are welded together by cooling the melted portions. A component comprising a thermoplastic resin material is thereby formed in which the first molded article, the second molded article, and the third molded article have been bonded together.

A manufacturing method for a component comprising a thermoplastic resin material of a second aspect of the present invention is the manufacturing method for a component comprising a thermoplastic resin material of the first aspect, wherein after the first process, the second process, and the third process, sliding contact is caused and vibration welding is performed between the first molded article and the third molded article and sliding contact is caused and vibration welding is performed between the second molded article and the third molded article at locations different to the locations welded in the third process, or sliding contact is caused and vibration welding is performed between the first molded article and the second molded article at locations different to the locations welded in the third process.

The manufacturing method for a component comprising a thermoplastic resin material of the second aspect of the present invention enables vibration welding to be performed again at locations different to the locations welded in the third process. This thereby enables the pressing force for pressing the first molded article, the second molded article, and the third molded article together not to become excessive compared to cases in which vibration welding is performed by vibration welding a single time at all locations.

A manufacturing device for a component comprising a thermoplastic resin material according to a third aspect of the present invention includes: a first mold set with a first molded article; a second mold set with a second molded article; a third mold set with a third molded article, the third molded article being formed using a thermoplastic resin material or a metal material in cases in which both the first molded article and the second molded article are formed using a thermoplastic resin material, or the third molded article being formed by using a thermoplastic resin material in cases in which one of the first molded article or the second molded article is formed using a thermoplastic resin material and cases in which both the first molded article and the second molded article are formed using a metal material; and a vibration application device that vibrates the third mold and moves the third mold relative to the first mold and the second mold, such that sliding contact is caused and vibration welding is performed between the first molded article and the third molded article, and such that sliding contact is caused and vibration welding is performed between the second molded article and the third molded article.

The manufacturing device for a component including a thermoplastic resin material of the third aspect enables, for example, a component including a thermoplastic resin material to be formed through the following processes. First, the first molded article and the second molded article are arranged so as to face each other by respectively setting the first molded article and the second molded article in the first mold and the second mold. Then the third molded article is disposed between the first molded article and the second molded article by setting the third molded article in the third mold. Then sliding contact between the first molded article and the third molded article and sliding contact between the second molded article and the third molded article is caused by vibrating the third mold using the vibration application device, and a molded article formed employing a thermoplastic resin is melted at portions where the sliding contact occurs. Then the first molded article and the third molded article are welded together, and the second molded article and the third molded article are welded together by cooling the melted portions. A component including a thermoplastic resin material is thereby formed in which the first molded article, the second molded article, and the third molded article have been bonded together.

### Advantageous Effects of Invention

The manufacturing method for a component comprising a thermoplastic resin material and the manufacturing device for a component comprising a thermoplastic resin material according to the present invention exhibit the excellent advantageous effect of enabling bonding of three components to be performed by vibration welding.

### Brief Description of the Drawings

Exemplary embodiments of the present invention will be described in detail based on the following figures, wherein:
Fig. 1 is a cross-section of a front bumper reinforcement formed using a manufacturing method for a component including a thermoplastic resin material according to an exemplary embodiment (a cross-section from the side taken along line A-A illustrated in Fig. 2 and Fig. 3).
Fig. 2 is a perspective view of a frame structure of a vehicle front section to which the front bumper reinforcement of Fig. 1 has been attached, as viewed from the vehicle front side;
Fig. 3 is a perspective view of the front bumper reinforcement illustrated in Fig. 1 and Fig. 2, as viewed from the vehicle front side;
Fig. 4 is a side cross-section illustrating a manufacturing device for a component including a thermoplastic resin material according to an exemplary embodiment;
Fig. 5 is a process cross-section for explaining a process for forming a component including a thermoplastic resin material using the manufacturing device illustrated in Fig. 4;
Fig. 6 is a perspective view corresponding Fig. 3 and illustrating front bumper reinforcement according to a modified example; and
Fig. 7 is a side cross-section illustrating a cross-section of front bumper reinforcement taken along line B-B illustrated in Fig. 6.

### Description of Embodiments

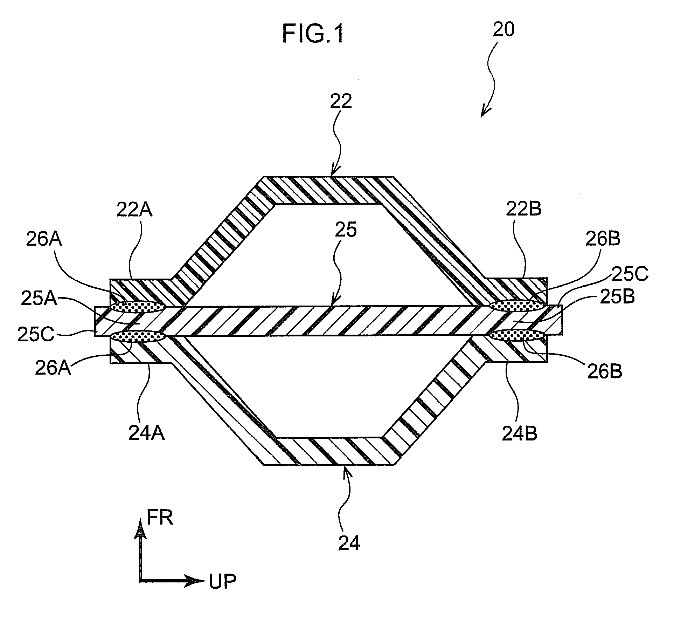

Explanation follows regarding a manufacturing method for a component including a thermoplastic resin material, and a manufacturing device for a component including a thermoplastic resin material, according to an exemplary embodiment of the present invention, with reference to Fig. 1 to Fig. 5. In the drawings, as appropriate, the arrow FR indicates a vehicle front direction of an automobile applied with the present exemplary embodiment, and the arrow IN indicates a vehicle width direction inside. The arrow UP indicates a vehicle upper direction. In the following explanation, when reference is simply made to the directions front-rear and up-down, these indicate the front-rear in the vehicle front-rear direction and up-down in the vehicle up-down direction.

### Configuration of Vehicle Front Section 10

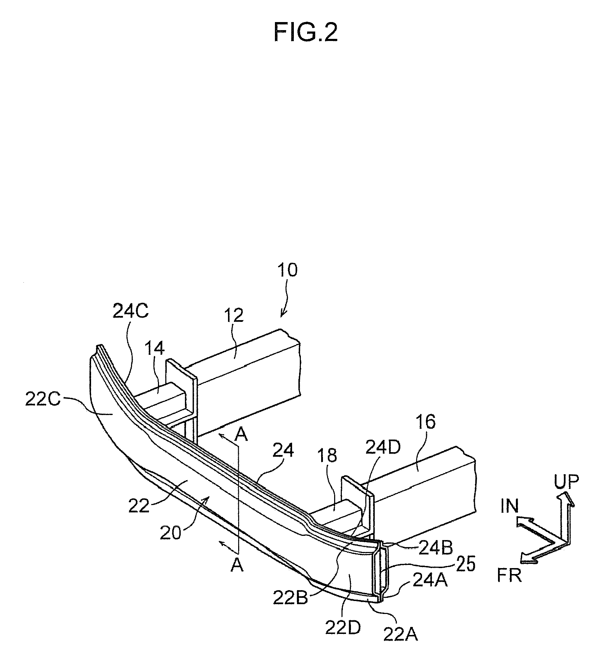

As illustrated in Fig. 2, front bumper reinforcement 20 (referred to below simply as bumper reinforcement), serving as a component including a thermoplastic resin material according to the present exemplary embodiment, is attached to a vehicle front section 10. In the vehicle front section 10, a front side member 12 having its length direction along the vehicle front-rear direction is connected to the vehicle rear side of one vehicle width direction end portion of the bumper reinforcement 20, with a crash box 14 interposed therebetween. A front side member 16 provided parallel to the front side member 12 is connected to the vehicle rear side of the other vehicle width direction end portion of the bumper reinforcement 20, with a crash box 18 interposed therebetween.

### Bumper Reinforcement 20

As illustrated in Fig. 1 to Fig. 3, the bumper reinforcement 20 includes a first molded article 22 provided at the vehicle front side, a second molded article 24 provided further to the vehicle rear side than the first molded article 22, and a third molded article 25 disposed between the first molded article 22 and the second molded article 24.

The first molded article 22 is formed by a plate shaped member having its length direction along the vehicle width direction, and its width direction along the vehicle up-down direction. Vehicle width direction end portions 22C, 22D of the first molded article 22 respectively curve toward the vehicle rear direction side. A lower end portion of the first molded article 22 bends toward the vehicle rear side, and the bent rear end bends further toward the vehicle lower side, such that a flange 22A is formed with an L-shape as viewed from the vehicle side. An upper end portion of the first molded article 22 bends toward the vehicle rear side, and the bent rear end bends further toward the vehicle upper side, such that a flange 22B is formed with an L-shape as viewed from the vehicle side, similarly to the flange 22A. As illustrated in Fig. 1, the first molded article 22 is configured by a hat-shaped cross-section projecting out at a vehicle up-down direction intermediate portion toward the vehicle front section when viewed from the vehicle side.

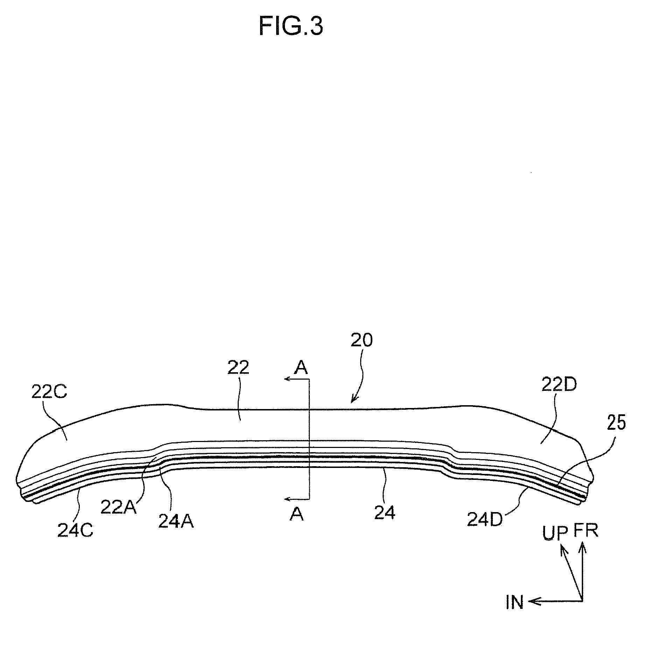

As illustrated in Fig. 1 and Fig. 3, the second molded article 24 is formed by a plate shaped member having its length direction along the vehicle width direction, and its width direction along the vehicle up-down direction, so as to correspond to the first molded article 22. Vehicle width direction end portions 24C, 24D of the second molded article 24 respectively curve toward the vehicle rear direction side. A lower end portion of the second molded article 24 bends toward the vehicle front side, and the bent front end bends further toward the vehicle lower side, such that a flange 24A is formed with an L-shape as viewed from the vehicle side. An upper end portion of the second molded article 24 bends toward the vehicle front side, and the bent front end bends further toward the vehicle upper side, such that a flange 24B is formed with an L-shape, similarly to the flange 24A. As illustrated in Fig. 1, the second molded article 24 is configured by a hat-shaped cross-section as viewed from the vehicle side, such that a vehicle up-down direction intermediate portion projects out toward the vehicle rear side.

As illustrated in Fig. 1 to Fig. 3, the third molded article 25 corresponds to the first molded article 22 and the second molded article 24, and is formed in a plate shape with its length direction in the vehicle width direction and its width direction in the vehicle up-down direction. Locations in the third molded article 25 corresponding to the vehicle width direction end portions 22C, 22D, 24C, 24D of the first molded article 22 and the second molded article 24 respectively curve toward the vehicle rear side. As illustrated in Fig. 1, the lower end portion of the third molded article 25 configures a lower side join portion 25A that is joined by vibration welding to the flanges 22A, 24A of the first molded article 22 and the second molded article 24, and the upper end portion of the third molded article 25 configures an upper side join portion 25B that is joined by vibration welding to the flanges 22B, 24B of the first molded article 22 and the second molded article 24. Projections 25C are formed by the third molded article 25 projecting out further to the vehicle lower side than the flanges 22A, 24A, and projecting out further to the vehicle upper side than the flanges 22B, 24B.

Locations where the flange 22A of the first molded article 22 and the lower side join portion 25A of the third molded article 25 are superimposed on each other, and locations where the flange 24A of the second molded article 24 and the lower side join portion 25A of the third molded article 25 are superimposed on each other, configure a weld portion 26A. The flanges 22A, 24A are welded to the lower side join portion 25A by the weld portion 26A. Locations where the flange 22B of the first molded article 22 and the upper side join portion 25B of the third molded article 25 are superimposed on each other, and locations where the flange 24B of the second molded article 24 and the upper side join portion 25B of the third molded article 25 are superimposed on each other, configure a weld portion 26B. The flanges 22B, 24B are welded to the upper side join portion 25B though the weld portion 26B.

The first molded article 22, the second molded article 24, and the third molded article 25 are formed by a thermoplastic resin material in the present exemplary embodiment. More precisely, the first molded article 22, the second molded article 24, and the third molded article 25 are each formed by CFRP provided with carbon fiber (CF) as fibers. CFRP has high strength and is light compared to, for example, metal materials, and is an ideal material for the bumper reinforcement 10. CFRPs are generally called composites. Any thermoplastic resin material out of polypropylene resins, polyamide resins (such as those having abbreviation numbers PA6, PA66, PA610, or PA10T), aromatic polyamide resins, semi-aromatic polyamide resins, polyphenylene sulfide (PPS) resins, polyethylene terephthalate (PET) resins, polybutylene terephthalate (PBT) resins, polycarbonate resins (PC), acrylic (PMMA) resins, ABS resins, and thermoplastic epoxy resins may be employed as the thermoplastic resin material employed in the compound material. Other than carbon fiber, any out of glass fiber (GF), amarid fiber, basalt fiber, bamboo fiber, a metal fiber such as steel, cellulose fiber, and polypropylene fiber (self-reinforcing types) may be employed as the fiber included in the thermoplastic resin material.

### Manufacturing Device for Bumper Reinforcement

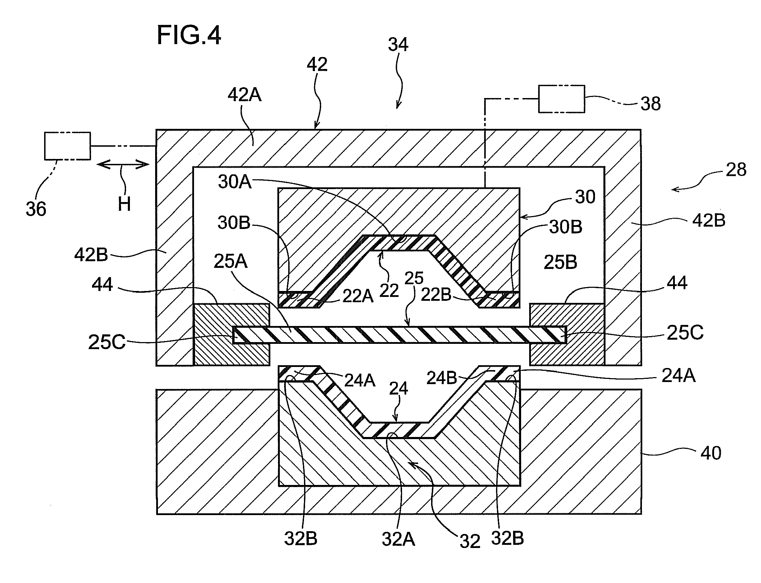

As illustrated in Fig. 4, a bumper reinforcement manufacturing device 28, serving as a manufacturing device for a component configured including a thermoplastic resin material, includes a first mold 30 set with the first molded article 22, and a second mold 32 that is disposed at the lower side of the first mold 30 and facing the first mold 30 in the up-down direction, and that is set with the second molded article 24. The bumper reinforcement manufacturing device 28 also includes a third mold 34 set with the third molded article 25, a vibration application device 36 that vibrates the third mold 34, and a pressurizing device 38 that biases the first mold 30 toward the second mold 32 side.

The first mold 30 is formed in a block shape formed by employing a metal material, such as steel. The first mold 30 includes a hollow section 30A opening toward the second mold 32 side, and flange support faces 30B formed along the edges of the opening of the hollow section 30A. The first molded article 22 is set in the first mold 30 such that the first molded article 22 is disposed along the hollow section 30A and the flange support faces 30B of the first mold 30. The pressurizing device 38 is connected to the first mold 30. The first mold 30 is movable toward the second mold 32 side by actuating the pressurizing device 38.

The second mold 32 is, similarly to the first mold 30, formed in a block shape formed by employing a metal material, such as steel. The second mold 32 includes a hollow section 32A open toward the first mold 30 side, and flange support faces 32B formed along the edges of the opening of the hollow section 32A. The second molded article 24 is set in the second mold 32 such that the second molded article 24 is disposed along the hollow section 32A and the flange support faces 32B of the second mold 32. The second mold 32 is fixed to a base member 40.

The third mold 34 includes a base 42 formed with a C-shaped cross-section open toward the second mold 32 side, and chucks 44 that clamp the two width direction end portions of the third molded article 25. The base 42 includes a top wall 42A extending in a horizontal direction at the upper side of the first mold 30, and a pair of side walls 42B extending out from the two end portions of the top wall 42A toward the base member 40 side. The chucks 44 are fixed into the end portions on the base member 40 side of the side walls 42B.

### Bumper Reinforcement Manufacturing Method

Explanation next follows regarding a manufacturing method for manufacturing the bumper reinforcement 20 using the bumper reinforcement manufacturing device 28 of the bumper reinforcement described above.

As illustrated in Fig. 4, first, the first molded article 22 and the second molded article 24 are set in the first mold 30 and the second mold 32, respectively, by disposing the first molded article 22 along the hollow section 30A and the flange support faces 30B of the first mold 30, and disposing the second molded article 24 along the hollow section 32A and the flange support faces 32B of the second mold 32 (a first process).

Then the third molded article 25 is set in the third mold 34 such that the two width direction end portions of the third molded article 25 (the projections 25C) are clamped by the chucks 44 of the third mold 34 (a second process).

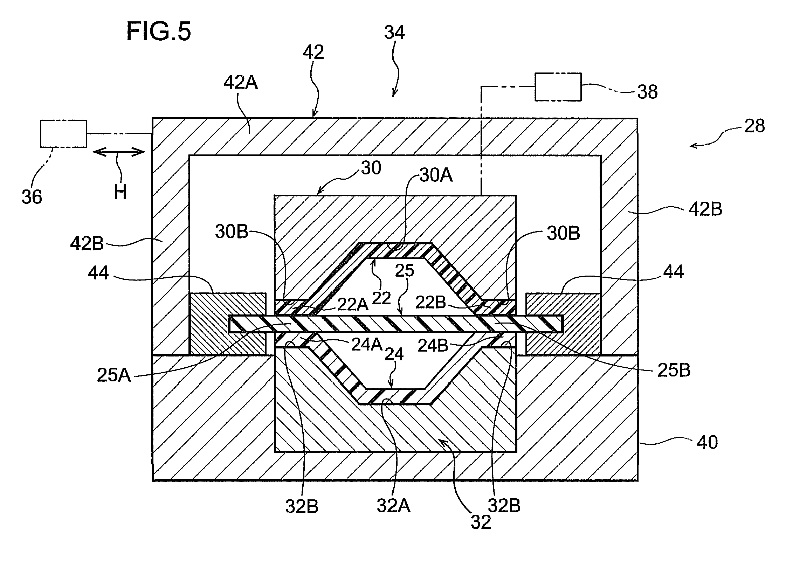

The pressurizing device 38 is then actuated so as to move the first mold 30 toward the second mold 32 side. Thereby, as illustrated in Fig. 5, the flange 22A of the first molded article 22, the flange 24A of the second molded article 24, and the lower side join portion 25A of the third molded article 25 are applied with pressure and clamped between the flange support face 30B of the first mold 30 and the flange support face 32B of the second mold 32. The flange 22B of the first molded article 22, the flange 24B of the second molded article 24, and the upper side join portion 25B of the third molded article 25 are also applied with pressure and clamped between the flange support face 30B of the first mold 30, and the flange support face 32B of the second mold 32.

The third mold 34 is then vibrated in the width direction of the third molded article 25 (vibrated in the direction of arrow H) and the third mold 34 is moved relative to the first mold 30 and the second mold 32. Sliding contact is thereby caused and vibration welding performed between flanges 22A, 22B of the first molded article 22 and the lower side join portion 25A and the upper side join portion 25B of the third molded article 25, and sliding contact is also caused and vibration welding performed between the flanges 24A, 24B of the second molded article 24 and the lower side join portion 25A and the upper side join portion 25B of the third molded article 25 (a third process).

As explained above, in the present exemplary embodiment the bumper reinforcement 20 is manufactured by integrating together the first molded article 22, the second molded article 24, and the third molded article 25 using the first step to the third step, as described above. Namely, in the present exemplary embodiment, three components (the first molded article 22, the second molded article 24, and the third molded article 25) can be joined together by vibration welding.

### Modified Example of Above Exemplary Embodiment

Explanation next follows regarding a bumper reinforcement 46, serving as a component configured including a thermoplastic resin material according to a modified example of the above exemplary embodiment. Note that members and components having a similar function to those of the above exemplary embodiment are allocated the same reference numerals as those of the above exemplary embodiment, and detailed explanation is omitted thereof.

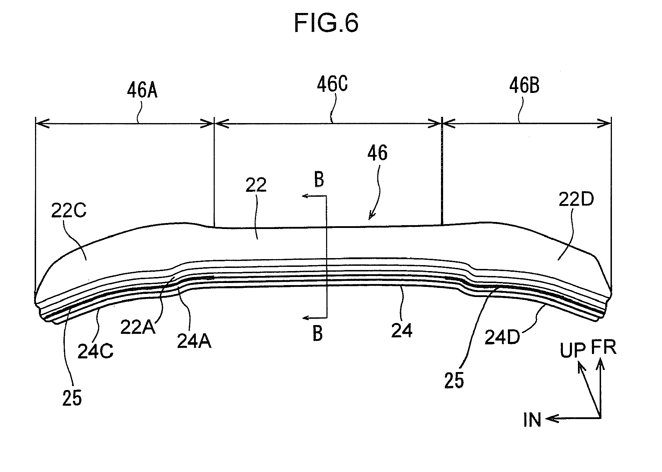

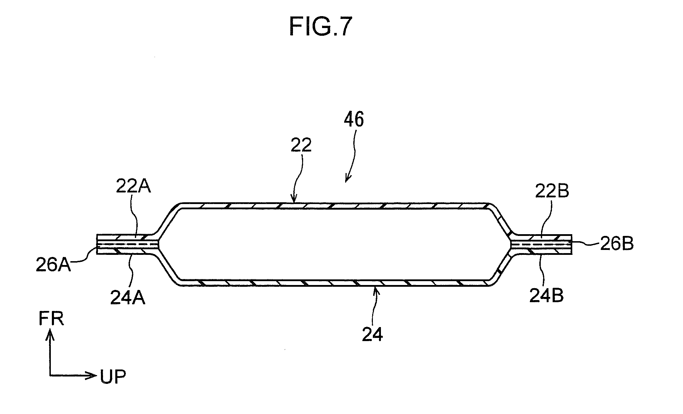

As illustrated in Fig. 6 and Fig. 7, the bumper reinforcement 46 according to the present modified example features a similar cross-section to the cross-section illustrated in Fig. 1 at two vehicle width direction side portions 46A, 46B, and a vehicle width direction central portion 46C thereof configures a cross-section without the third molded article 25. As illustrated in Fig. 7, the central portion 46C of the bumper reinforcement 46 is joined to the flanges 22A, 22B of the first molded article 22 and to the flanges 24A, 24B of the second molded article 24 by vibration welding.

A manufacturing device for forming the bumper reinforcement 46 described above includes a first mold 30, a second mold 32, a third mold 34, a pressurizing device 38, and a vibration application device 36, for vibration welding the first molded article 22, the second molded article 24, and the third molded article 25 together at one vehicle width direction side portion 46A and another width direction side portion 46B of the bumper reinforcement 46 (see Fig. 4, for example). The manufacturing device for forming the bumper reinforcement 46 also includes the first mold 30, the second mold 32, the pressurizing device 38, and the vibration application device 36, for vibration welding the first molded article 22 and the second molded article 24 together at a vehicle width direction central portion 46C of the bumper reinforcement 46 (see Fig. 4, for example). The second mold 32 is connected to the pressurizing device 38 and the vibration application device 36 at the vehicle width direction central portion 46C.

According to the manufacturing device explained above, the first molded article 22, the second molded article 24, and the third molded article 25 can be vibration welded together at the one vehicle width direction side portion 46A of the bumper reinforcement 46 by performing a process corresponding to the first process to the third process of the above exemplary embodiment at the portion 46A. The first molded article 22, the second molded article 24, and the third molded article 25 can then be vibration welded together at the other vehicle width direction side portion 46B of the bumper reinforcement 46 by performing a process corresponding to the first process to the third process of the above exemplary embodiment at the portion 46B. Then finally, the flanges 22A, 22B of the first molded article 22 and the flanges 24A, 24B of the second molded article 24 can be welded together so as to manufacture the bumper reinforcement 46 by vibration welding at the vehicle width direction central portion 46C of the bumper reinforcement 46.

In the above manufacturing device, vibration welding can be re-performed at locations different to the locations where vibration welding was initially performed. This thereby enables the pressing force for pressing the first molded article 22, the second molded article 24, and the third molded article 25 together to be suppressed from becoming excessive better than in cases in which vibration welding is performed by vibration welding a single time at all locations.

### Supplementary Explanation to Above Exemplary Embodiment

The present invention is not limited to the above exemplary embodiment, and various modifications are possible within a range not departing from the spirit of the present invention. As an example, in the above exemplary embodiment the first molded article 22, the second molded article 24, and the third molded article 25 are each formed from a thermoplastic resin material including fibers; however, the present invention is not limited thereto. For example, the third molded article 25 formed by employing a metal material may be employed in cases in which both the first molded article 22 and the second molded article 24 are formed by employing a thermoplastic resin material. Moreover, the third molded article 25 formed by employing a thermoplastic resin material may be employed in cases in which one out of the first molded article 22 or the second molded article 24 is formed using a thermoplastic resin material, and when both the first molded article 22 and the second molded article 24 are formed by employing a metal material. Light-weight metal material such as steel or aluminum, or alloy material and light-weight alloys, may be employed as the metal material.

There is also no limitation to the above bumper reinforcement, and the present invention is applicable to a manufacturing method for a component-joined body that is a vehicle frame member having at least a portion thereof formed from a thermoplastic resin material, such as a vehicle pillar, rocker, or member.

The present invention is moreover widely applicable to manufacturing methods of component-joined bodies in vehicles other than automobiles, and in aircraft, ships, and buildings.

## Claims

1. A manufacturing method for a component (20; 46) comprising a thermoplastic resin material, the manufacturing method comprising:
a first process of respectively setting a first molded article (22) and a second molded article (24) in a first mold (30) and a second mold (32) that have been arranged so as to face each other;
a second process of setting a third molded article (25) in a third mold (34) such that the third molded article (25) is disposed between the first molded article (22) and the second molded article (24), the third molded article (25) being formed using a thermoplastic resin material or a metal material in cases in which both the first molded article (22) and the second molded article (24) are formed using a thermoplastic resin material, or the third molded article (25) being formed using a thermoplastic resin material in cases in which one of the first molded article (22) or the second molded article (24) is formed using a thermoplastic resin material and in cases in which both the first molded article (22) and the second molded article (24) are formed using a metal material; and
a third process of vibrating the third mold (34) and moving the third mold (34) relative to the first mold (30) and the second mold (32), such that sliding contact is caused and vibration welding is performed between the first molded article (22) and the third molded article (25), and such that sliding contact is caused and vibration welding is performed between the second molded article (24) and the third molded article (25).

2. The manufacturing method for a component (20; 46) comprising a thermoplastic resin material of claim 1, wherein, after the first process, the second process, and the third process, sliding contact is caused and vibration welding is performed between the first molded article (22) and the third molded article (25) and sliding contact is caused and vibration welding is performed between the second molded article (24) and the third molded article (25) at locations different to the locations welded in the third process, or sliding contact is caused and vibration welding is performed between the first molded article (22) and the second molded article (24) at locations different to the locations welded in the third process.

3. A manufacturing device (28) for a component (20; 46) comprising a thermoplastic resin material, the manufacturing device comprising:
a first mold (30) set with a first molded article (22);
a second mold (32) set with a second molded article (24);
a third mold (34) set with a third molded article (25), the third molded article (25) being formed using a thermoplastic resin material or a metal material in cases in which both the first molded article (22) and the second molded article (24) are formed using a thermoplastic resin material, or the third molded article (25) being formed using a thermoplastic resin material in cases in which one of the first molded article (22) or the second molded article (24) is formed using a thermoplastic resin material and in cases in which both the first molded article (22) and the second molded article (24) are formed using a metal material; and
a vibration application device (36) configured to vibrate the third mold and move the third mold (34) relative to the first mold (30) and the second mold (32), such that sliding contact is caused and vibration welding is performed between the first molded article (22) and the third molded article (25) and such that sliding contact is caused and vibration welding is performed between the second molded article (24) and the third molded article (25).
